# EUROPEAN PATENT SPECIFICATION

(11) **EP 4 442 434 B1**
(45) Date of publication and mention of the grant of the patent: **23.09.2026**
(21) Application number: 23167185.0
(22) Date of filing: 07.04.2023
(51) Int. Cl.: B29C 64/112, B29C 64/386, B33Y 10/00, B33Y 50/00

(54) **INKJET PRINTING OF THREE DIMENSIONAL STRUCTURES**
TINTENSTRAHLDRUCK VON DREIDIMENSIONALEN STRUKTUREN
IMPRESSION À JET D'ENCRE DE STRUCTURES TRIDIMENSIONNELLES

(43) Date of publication of application: 09.10.2024
(73) Proprietor: Canon Production Printing Holding B.V., 5914 HH Venlo (NL)
(72) Inventor: Van der Asdonk, Pim, Venlo (NL)
(74) Representative: Canon Production Printing IP Department

(56) References cited:
- US-A1- 2010 118 086
- US-A1- 2012 133 080

## Description

### BACKGROUND OF THE INVENTION

### 1. Field of the invention

The invention relates to a method of inkjet printing a haptic surface on a print medium, a scanning inkjet printer, and a computer program.

### 2. Description of Background Art

It is known from e.g. US 10281904 B2 to print three-dimensional structure using a scanning inkjet printer. Such a scanning inkjet printer comprises a printhead carriage comprising at least one printhead for jetting onto a print medium on a medium support surface. The printhead carriage is reciprocally translatable over the medium support surface in a scanning direction, which is perpendicular to a transport direction, wherein the print medium is moved with respect to a support beam along which the printhead carriage translates. The latter may be achieved by moving the print medium and/or the support beam in the transport direction. The printhead is configured to jet marking material, such as ink (colored or colorless), specifically a radiation curable ink. The radiation curable ink is jetted from nozzles on the printhead in the form of liquid droplets. A curing station, such as an optical emitter, is provided for curing the droplets. The curing station emits light at least within a predetermined range determined by the marking material, thereby inducing a chemical reaction within one or more components in the marking material, causing the marking material to harden and become fixed onto the print medium. Three-dimensional structures are formed by repeatedly and selectively depositing layers of marking material on top of one another. Each layer is generally cured before adding another on top of it. Thus, a hard and/or rigid three-dimensional print can be created. The size of the individual droplets in inkjet printing is generally small, possibly as low as a few pico-liters, such that printing a three-dimensional structure may take a relative long time.

US 2012/133080 A1 discloses a method and an apparatus for improving the accuracy of three-dimensional objects formed by additive manufacturing. By depositing or hardening build material within the interior of the layers in certain patterns, the stresses that lead to curl in the object can be isolated and controlled. Similarly, certain patterns for depositing or hardening the build material provide for reduced layer thicknesses to improve the sidewall quality of the object being formed. The patterns within the interior of the layers can include gaps or voids for particular layers being deposited or hardened, and the gaps or voids can be partially filled, fully filled, or not filled at all when subsequent layers are deposited or hardened. Accordingly, the accuracy of three-dimensional objects formed by additive manufacturing is improved.

US 2010/118086 A1 discloses a system that prints three dimensional products, the system including at least one object incorporation device that incorporates non-printed objects into partially completed product, the non-printed objects not being printed by the system.

### SUMMARY OF THE INVENTION

It is an object of the invention to provide an improved method of inkjet printing three-dimensional structures, specifically wherein the time for printing such a structure is reduced.

In accordance with the present invention, a method of inkjet printing a three-dimensional structure according to claim 1, an inkjet printer according to claim 12, and a computer program according to claim 13 are provided.

The method comprises the steps of:
- jetting a plurality of droplets of marking material to form a first layer segment formed of interconnected, jetted droplets, wherein the first layer segment comprises a first matrix of voids, wherein the droplets of marking material comprise a gelling agent for providing sufficient viscosity to allow a droplet to overhang with respect to a droplet it was deposited on;
- curing the first layer segment, such that the first matrix of voids is maintained in the first layer segment;
- jetting a plurality of droplets to form a second layer segment formed of interconnected, jetted droplets, which second layer segment is deposited overlapping the first layer segment, and wherein the second layer segment comprises a second matrix of voids, wherein positions of voids in the second matrix are different from voids in the first matrix;
- curing the second layer segment, such that the second matrix of voids is maintained in the second layer segment and the second layer segment forms an integral structure with the first layer segment,
   wherein in the curing steps a time between jetting a droplet and curing said droplet is less than 1 s;
- repeating the previous steps to deposit further layer segments to form the three-dimensional structure.

It is the insight of the inventor that hollow cavities can be formed and preserved in a three-dimensional structure by depositing the marking material such that the layer segment of marking material contains voids and rapidly curing the layer segment to prevent the droplets from coalescing across and/or into the voids. When building up the three-dimensional structure, the positions of the voids are varied across the different layer segments to preferably maintain an overall constant material density and/or to avoid structural weaknesses. The matrices are selected, such that all droplets in the final three-dimensional structure are connected to one another via marking material. An overhanging droplet in the second layer segment is cured so that its overhanging portion is preventing from substantially sagging into the first layer segment. The time period between the landing of the droplet and its curing is so short that the free hanging portion of a droplet is prevented from substantially bending into the adjacent void. A time between jetting a droplet and curing said droplet is less than 1 s, preferably less than 0.5 s, very preferably less than 250 ms, and even more preferably less than 150 ms. To fix the droplets on top of a structure-in-formation, the droplets are cured quickly after landing on their respective structure-in-formation. This ensures that the entirety or majority of the volume of the droplet is adhered to the top of the structure-in-formation. Due to the presence of the hollow cavities relatively less marking material is required to form the three-dimensional structure, as compared to an entirely solid form. This reduces the total production time as less time is required for jetting and/or curing the marking material. Additionally, the weight of the three-dimensional structure is reduced, as less material is needed as compared to an entirely solid structure. Another advantage is that less UV light is needed to cure the layer segments as compared to a solid structure. This allows more marking material to be deposited per jetting step prior to each curing step. Inside the voids allow the light applied for curing from above will refract via the edges of the voids into lower laying layer segments of the structure Thereby the object of the present invention has been achieved.

More specific optional features of the invention are indicated in the dependent claims.

In an embodiment, a cross-sectional width of the voids is substantially equal to or greater than at least 70%, preferably 80%, or very preferably 90% of a diameter of the jetted droplets. A width of the void, for example its maximum cross-section parallel to the plane of the print medium, exceeds the average droplet diameter of the droplet measured in flight or as can be determined from the droplet volume.

In an embodiment, a distance D between centers of two droplets forming opposite edges of a void in a layer segment follows the following equation: $D \geq 2 ⋅ S ⋅ \sqrt[3]{\frac{3 V}{4 π}}$ wherein V is a volume of a droplet and S is a droplet spread factor which is at least 1.5, preferably at least 1.6. During flight the droplet's shape is substantially spherical or droplet-shaped. Upon impact, the droplet is flattened causing it to spread or broaden in directions parallel to the plane of the print medium. To form a void droplets are jetted at a sufficient distance from another taking into account this local spreading of the droplets. The distance between the centers of droplets across a void is at least the diameter of a droplet in flattened form parallel to the plane of the print medium. Preferably, the void is at least the width of a flattened droplet, such that the distance D between centers of two droplets forming opposite edges of a void in a layer segment follows the following equation: $D \geq 4 ⋅ S ⋅ \sqrt[3]{\frac{3 V}{4 π}}$

In an embodiment, the second layer segment is fully overlapping the first layer segment. The layer segments are positioned overlapping one another, resulting in a straight or tapering structuring. Each subsequent layer segment preferably has an area no greater than the previously deposited layer segment.

In an embodiment, a volume of each individual droplet is less than 100 pl, preferably less than 50, and very preferably less than 20 pl. The droplets are preferably sufficiently small to form a narrow structure. In another embodiment, all droplets preferably have the same volume. Preferably, these droplets with similar volumes are jetted from their respective nozzle with the same relative velocity and position of their respective nozzle with respect to the droplet's intended landing position on the print medium and/or structures-in-formation.

In an embodiment, a density of voids is substantially homogenous throughout the three-dimensional structure. With the exception of the edges, the void density, the numbers or volume of voids per unit volume of the three-dimensional structure, is substantially constant throughout the inner portion of the three-dimensional structure. Preferably, the positions of at least a majority of the voids in each layer segment vary per layer segment, though in the final structure the density is roughly constant. The outer edges of the structure form an exception, where preferably a solid layer is deposited to seal the inner portion of the three-dimensional structure and allow for controlled deposition of e.g. specific colors or coatings.

In an embodiment, each void is comprised in one of a plurality of void assemblies, wherein each void assembly is enclosed by marking material. By applying several layer segments voids can be incorporated into a sealed off void assembly. The entire circumference of the void assembly is formed of marking material, fully surrounding the void assembly on all sides. A sealed off void assembly may be formed of a single void in a middle layer segment sealed in by void-free sections of an upper and lower layer segment, or by multiple voids in different layer segments which voids are at least partially overlapping one another.

In an embodiment, voids are delimited by droplets in the second layer segment overhanging with respect to a respective droplet in the first layer segment on which they were respectively jetted. To seal off a void or void assembly, the opening formed of the void is closed off by positioning a droplet in a layer segment above the void, such that the droplet partially overlaps the void or void assembly, when viewed from above in the stacking direction of the layer segments (which is generally opposite to the jetting direction of the droplets). The relatively high viscosity of the marking material, allows a large portion of the droplets to hang over the void or void assembly without curving into the void or void assembly under the influence of gravity, at least for the relatively short period until the droplet is cured. In this manner a void or void assembly may be sealed by one or more droplets which partially overlap an empty space in a layer segment below them.

In an embodiment, the step of curing comprises irradiating the marking material by emitting and/or exposing the material to light within a predetermined wave length range, such that the absorption of the light causes a photochemical reaction in the marking material, which causes the marking material to harden, preferably to change the liquid marking material into a solid. It will be appreciated that liquid herein may include a liquid gel state.

In an embodiment, the gelling agent provides sufficient viscosity to allow a droplet to overhang with respect to a droplet it was deposited on by at least 10% of its diameter, preferably at least 20%, more preferably at least 30%, even more preferably at least 40%, and very preferably at least 50% of its diameter. In an embodiment, the radiation curable marking material comprises a gellant, which provides sufficient viscosity to the drops to allow an uncured further drop to be positioned on a previous drop without a majority of the marking material of the further drop flowing down onto and/or past the previous drop. The viscosity of a gellant can be controlled by controlling its temperature and by selecting the wt% of gellant in the ink, so that at the moment of landing the marking material has the desired, high viscosity. The marking material is preferably relatively viscous to ensure that an uncured drop remains stably on top of its respective structure-in-formation until it is fixed there by means of curing the drop by exposure to radiation. Gel-based marking materials, commonly referred to as 'gel inks', generally have a relatively high viscosity, at least after having been cooled down after landing on the print medium. In a preferred embodiment, the marking material applied comprises a gellant or (the gelling agent) which comprises molecules with a weight-averaged molecular weight of less than 5000, in particular less than 1000, preferably less than 500. The addition of a small quantity of well-known high-molecular gellants such as carragenan, laminarane, pectin and gums such as arabic, xanthane and guar gums may lead to an unacceptably high viscosity at the jetting temperature of the ink (i.e. the operating temperature of the print head), which means that there is an adverse effect on the jetting properties of the ink. Oligomer gellants, i.e. gelling agents with a molecular weight less than 5000 are therefore preferably used, so that the gellant does not have an adverse effect on the viscosity of the ink composition. In a further preferred embodiment, low-molecular gellants are used, i.e. gelling agents with a molecular weight less than 1,000 or even 500. The fact that these oligomer and low-molecular compounds can have gelling properties despite their relatively low molecular weight can be explained as follows. In the case of oligomer and low-molecular gellants, the molecules of this agent are believed to separate from the carrier composition on an adequate reduction of the temperature, and form long compound chains via mutual (typical non-covalent) interactions, said chains possibly behaving in the same way as the high-molecular polymers in the previously mentioned well known gellants. When the gel is heated up, the interactions between the molecules of the gellants are interrupted and a solution (here-after also called sol) re-forms. A supplementary advantage of the use of oligomer and low molecular gellants is that the gel-sol transition takes place relatively quickly, because for this transition it is only necessary to break the relatively weak non-covalent bonds between the compound molecules of the polymer chains. In addition, small molecules will solve homogeneously in their carrier composition more rapidly. In another embodiment the marking material comprises less than 10%, preferably less than 5% by weight of the gellant. This has the advantage that the gellant itself is of less influence on the properties, in particular the mechanical properties, of the ultimately cured ink. This is even stronger the case when the gellant is radiation curable itself. Such gel-based inks are commercially known and available, for example e.g. 'Canon UV gel ink 460' as available in the year 2021 and/or 2022, in any of the color cyan, yellow, magenta, black, and/or white. Preferably, the marking materials further comprise at least one acrylic component. Acrylates are commonly known materials for combining with colorants for forming a printing ink.

In an embodiment, the droplets further comprise a photo-initiating agent, preferably a UV light-initiating agent, for curing the droplets. The curing step comprises then irradiating the drops with UV-radiation. UV-curing starts off with initiating a reaction by the emission of light in the ultraviolet spectrum. A UV-initiator (also known as a photoinitiating agent) absorbs the UV-light which causes e.g. the formation of radicals or ions. UV-initiators commonly used with these compounds are Esacure 1187 and Chivacure 1172. Many photosensitisers are known for these initiators and can be found i.a. among the anthracene-, xanthone-, thiazine-, acridine-, and porphorine-derivates. Particular compounds are for example 1,6 diphenyl-1,3,5 hexatriene, pyrene and perylene. Colorants such as commercially available pigments may optionally be added to the marking material.

In an embodiment, droplets forming a wall section of each void are positioned partially overlapping on top of one another, such that a portion of the droplet inside the void remains uncovered. The print media moves relative to the printhead, either by moving the printhead (scanning printer) or by transporting the print medium past a page wide printhead array. In this transport direction, the droplets in an upper layer segment may be positioned offset with respect to a lower layer segment, resulting in the centers of the droplets in the upper layer segment being positioned at different positions than the centers of the respective underlying droplets in the layer segment below. In case a void is present in a layer segment, a droplet in a layer segment above it will be positioned overhanging the void due to the offset.

The invention further relates to an inkjet printer comprising:
- a printhead assembly mounted over a medium support surface and comprising at least one printhead comprising nozzles for jetting droplets of UV curable marking material onto a print medium on the medium support surface;
- a curing station configured for emitting UV radiation for curing marking material on the print medium on the medium support surface;
- a controller configured for performing any embodiments of the method described above.

The invention further relates to a computer program comprising instructions which, when the program is executed by the above mentioned printer, causes the printer to carry out the steps of any embodiments of the method described above.

Further scope of applicability of the present invention will become apparent from the detailed description given hereinafter.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic representation of a scanning inkjet printer;
Figs. 2 to 9 illustrate different steps of a method of a three-dimensional structure comprising void assemblies;
Figs. 10 to 13 are schematic views of different print masks applied for printing a three-dimensional structure comprising voids; and
Fig. 14 is a schematic, cross-sectional view of a three-dimensional structure printed by using the print masks in Figs. 10 to 13.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

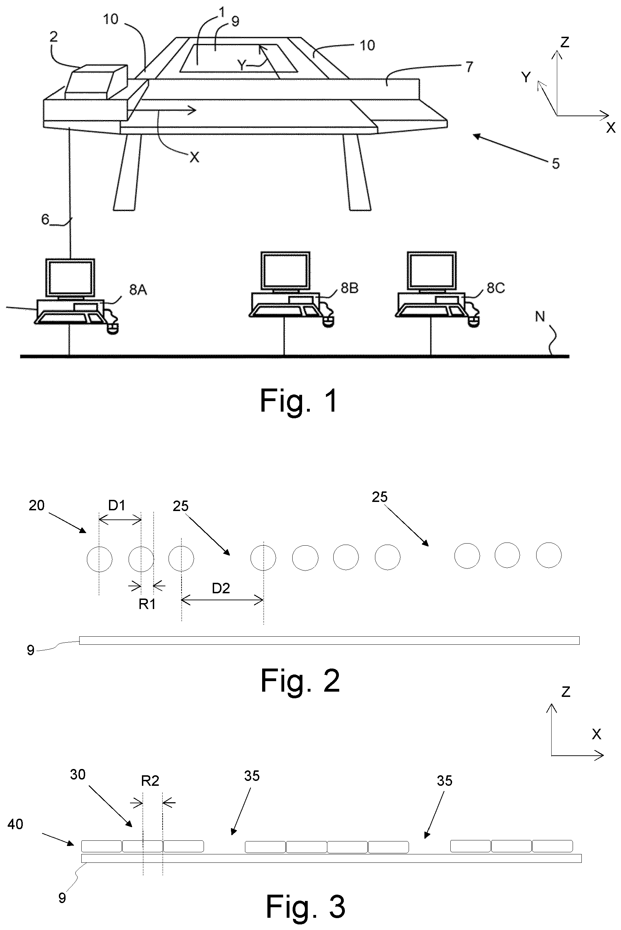

Fig. 1 is a print system comprising a number of workstations 8B and 8C, which may be personal computers or other devices for preparing colour image data for three dimensional objects to be printed. These workstations have access to a network N for transferring the colour image data to a print controller 8A that is configured to receive print jobs for three-dimensional objects consisting of voxels and derive pass images for each pass of the print engine 2 over the print medium support surface 1 of the flatbed. A print medium 9 is supported on the print medium support surface 1 facing the print engine 2 during printing. The print system comprises the print engine 2 for applying colorants, in this embodiment cyan (C), magenta (M), yellow (Y), black (K) and white (W) colorant (though in practice clear or transparent ink or varnish may be applied as well), to a flat print medium 9, the substrate, in order to obtain a printed object. In this embodiment a UV-curable material is applied by printheads that reciprocally scan the substrate in a movement direction X perpendicular to a transport direction Y by means of a gantry 7. A curing station is provided to solidify the marking material after printing on the substrate by exposing it to UV-radiation and/or UV light. The radiation preferably has a wavelength between or around 10 and 400 nm. Other types of marking materials or pre-treatment materials, such as primers, may further be applied within the present invention. It will further be appreciated that the present invention may be applied to any scanning inkjet printer, which includes a flatbed printer as shown in Fig. 1 as well as roll, web, sheet, rigid, and/or hybrid printers, wherein the print medium 9 is transported perpendicular to the scanning direction X, preferably between passes of the printheads. In another example, a stationary page-wide printhead array with parallel rows of printheads may be applied, so that the structures may be formed in a single pass as well. The curing station (not shown) may be incorporated in the same carriage as the printhead or be provided on a separate support. The curing station may be movable or entirely stationary.

Preferentially the distance between the flat substrate and the print elements that are used to apply the various colorants, is variable. This distance may be varied in order to keep the upper surface of the object within the latitude of the print elements. The latitude of the distance between a substrate of the scanning printhead is in print engine 2 about 0.5 to 2 mm.

The printer comprises a user interface (not shown), which is placed on the print engine, but which may also be part of the printer controller 8A, for selecting a print job and optionally adapt a print job parameter, such as an absolute height parameter for indicating a maximum height of the object to be printed. A maximum number of voxels in the height direction perpendicular to the substrate may be used as height parameter. A user interface may be provided as a network site that is accessible with a browser on a client computer.

After sending a print job comprising image data from a workstation to the printer controller, the print job will be made visible on the user interface. It may be scheduled for further processing after selection from a list of print jobs or, alternatively, if the print job is on top of the list of print jobs. The print job comprises parameter values that determine the way the image data are to be printed, such as the way how the image data are to be converted into print data.

### Printing method for three-dimensional structures

Figs. 2 to 9 illustrates the repeating steps for rapidly forming a three-dimensional structure. In Fig. 2 a suitable print medium 9 is provided on a printer 1. The print engine 2 jets a plurality of droplets 20 in the form of a first swath on the print medium 9. The droplets 20 are in a liquid state during the jetting process. The print engine 2 is controlled, such that the droplets 20 are jetting with varying nearest neighbour spacing in on or more directions parallel to the plane of the print medium 9. A first category of neighboring droplets 20 that are intended to coalesce are jetted sufficiently close to one another, such that upon landing on the print medium 9, these closely positioned droplets 20 deform so that they are in direct contact with one another. Neighboring droplets 20 that are to coalesce are preferably jetted from directly neighboring nozzles of the respective printhead of the print engine 2. A second category of neighboring droplets 20 are jetted spaced apart from one another by a predetermined void spacing 25. The void spacing 25 is sufficiently wide, such that neighboring droplets 20 on opposite sides of the void spacing 25 are prevented from coalescing together. After landing on the print medium 9, neighboring droplets 20 of the second category do not come into direct contact with one another. This is illustrated in Fig. 3, wherein the deposited droplets 30 on the print medium 9 form a first layer segment 40. All deposited droplets 30 are deformed, specially flattened or spread out, with respect to their shape during jetting, as in Fig. 2. This deformation is a consequence of gravity and impact of the droplet 20 on the print medium 9, as well as the degree of wetting on any given substrate attributed to the surface tension or the critical surface energy of the substrate and the liquid. The radius R1 of a droplet 20 in flight in Fig. 2 is smaller than a radius R2 of a flattened droplet 30 in the layer segment 40 in Fig. 3, when measured in the in-plane direction X: $R 1 < R 2 = S ⋅ R 1$

S is a spread factor, which for the marking materials applied herein has a value in the range 1.1 to 2, preferably 1.2 to 1.8, and very preferably 1.3 to 1.7.

The droplets 20 preferably are relatively viscous to limit the flattening and/or spreading. Preferably, the marking material of the droplets 20 is sufficiently viscous to prevent deformation under the influence of gravity, wherein the effective radius of the deposited droplet 30 on the print medium, measured parallel to the plane of the print medium 9, is less than 2 times the radius of the droplet 30 during jetting, more preferably less than 1.8 times, and very preferably less than 1.7 times, at least for a certain jetting velocity. Preferably, the viscosity of the marking material is at least 100 mPa s, very preferably at least 200 mPa s, and even more preferably 500 mPa s at 20°C, as measured using an Anton Paar MCR 301 rheometer at shear rates (*γ̇*) of 100 s⁻¹. To facilitate easy jetting of the droplets D, the marking material may be heated before jetting, such that the viscosity of the marking material is lowered, for example to less than 50 mPa s, preferably less than 20 mPa S, and even more preferably less than 10 mPa s in a temperature range between 45 and 60°C, at shear rates of 10 or 100 s⁻¹. The print medium 9 may be cooled or at a lower relative temperature to locally increase the viscosity to reduce the spreading out of the droplets 20.

It was found that marking materials that comprise a gellant were particularly advantageous for forming a relatively high viscosity marking material. Such marking materials are known as e.g. a gelling radiation curable inkjet ink. This ink comprises a gellant and a radiation curable component. Such an ink is described in e.g.

US 10308825 B1 and/or WO 2007025893 A1, specifically in the respective sections describing the composition of said inks. The gellant may in an embodiment be ester-based, while the radiation curable component may be of the group of epoxides and (meth)acrylates. (Meth-)acrylates may comprise one or more reactive groups for forming an acrylate polymer. An advantage of the gelling radiation curable inkjet ink is that the great increase in its viscosity as a droplet of it lands on the print medium or structures-in-formation. The gelling radiation curable inkjet ink is preferably heated upstream of the nozzles to facilitate transporting and jetting of the gelling radiation curable inkjet ink. After jetting, the droplets of gelling radiation curable inkjet ink cool down rapidly, such that the gellant crystallizes into relatively small crystal domains. This results in a rapid and large boost in viscosity.

After spreading out, as shown in Fig. 3, the deposited, neighbouring droplets 30 of the first category are in direct contact with one another. The droplets 20 of the first category were during jetting spaced apart from their neighbour of the first category, while after deposition the jetted droplets 30 of this first category are deformed so that neighbouring droplets 30 touch one another. Fig. 2 and 3 illustrate the deformation of the droplet 20 due to impact. Whereas prior to impact a droplet has a radius R1, the respective, deposited droplet 30 has a larger radius R2. The relative increase in radius is expressed via the spread factor: $S = \frac{R 2}{R 1}$

The spacing D1 between the centers of neighboring droplets with a volume V of the first category then follows: $D 1 \leq 2 ⋅ S ⋅ \sqrt[3]{\frac{3 V}{4 π}}$

The spacing D2 between neighboring droplets 20 of the second category follows: $D 2 > 2 ⋅ S ⋅ \sqrt[3]{\frac{3 V}{4 π}}$

In Fig. 3 specifically, the spacing D2 is: $D 2 \geq 4 ⋅ S ⋅ \sqrt[3]{\frac{3 V}{4 π}}$

Preferably, the spacing D2 is selected such that the width of a void 35 equals the width of a flattened droplet 30, such that: $D 2 \approx 2 ⋅ n ⋅ S ⋅ \sqrt[3]{\frac{3 V}{4 π}}$

Herein n is a non-zero integer value. This allows each new layer segment to be shifted by a distance R2 in the in-plane direction X, allowing for a simple repetition for forming voids.

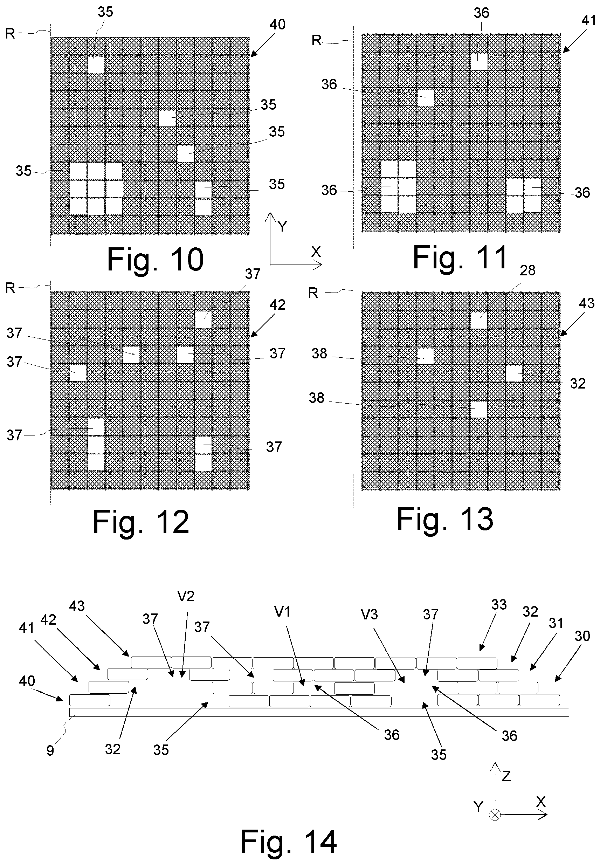

In consequence, deposited, neighboring droplets 30 of the second category result in voids 35 in the first layer segment. A plurality of voids 35 is provided in the first layer segment distributed across both in-plane directions of the print medium 9, as will be illustrated with respect to Figs. 10-13.

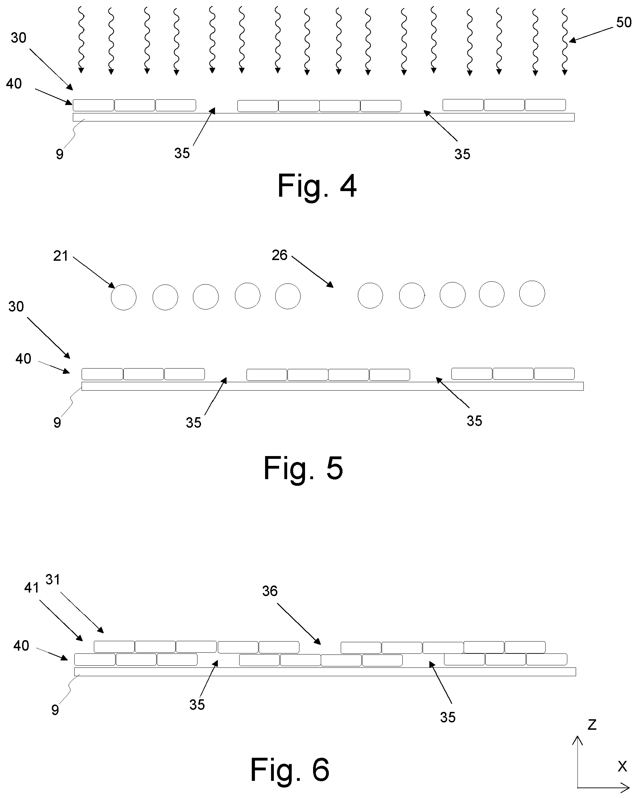

Fig. 4 illustrates the step of curing the first layer segment 40 by exposing it to radiation 50. The radiation is preferably light of a predetermined (range of) wavelengths that is absorbed by a photo-initiating agent to initiate a hardening or phase-changing process. Preferably, the marking material comprises an UV-initiator and a colorant, and wherein the curing step comprises irradiating the drops with UV-radiation. UV-curing starts off with initiating a reaction by the emission of light in the ultraviolet spectrum. A UV-initiator (also known as a photoinitiating agent) absorbs the UV-light which causes e.g. the formation of radicals or ions. UV-initiators commonly used with these compounds are Esacure 1187 and Chivacure 1172. Many photosensitisers are known for these initiators and can be found i.a. among the anthracene-, xanthone-, thiazine-, acridine-, and porphorine-derivates. Particular compounds are for example 1,6 diphenyl-1,3,5 hexatriene, pyrene and perylene. Colorants are commercially available as pigments. The radiation is preferably UV-light with a wavelength corresponding to the UV-initiator.

In Fig. 4, the first layer segment 40 is cured by radiation 50, so that the voids 35 are preserved in the layer segment 40. Preferably, the first layer segment 40 is exposed to the radiation 50 immediately or rapidly after depositing the droplets 20 on the print medium 9. Thereby, the spreading out of the deposited droplets 30 can be accurately controlled.

Fig. 5 illustrates the step of depositing a second swath of droplets 21 on the first, cured layer segment 40. The droplets 21 are jetted similar to Fig. 2, but the spacings 26 between neighboring droplets 21 of the second category are substantially different from Fig. 2, in position and/or shape. All the majority of the spacings 26 have a different position in the in-plane direction X as compared to the spacings 25 in Fig. 2. Further, the droplets 21 are jetted to land in between centers of the droplets 30 forming the first layer segment 40. The centers of the droplets 21 are to land on or over a respective edge of a droplet 30 in the first later segment 40.

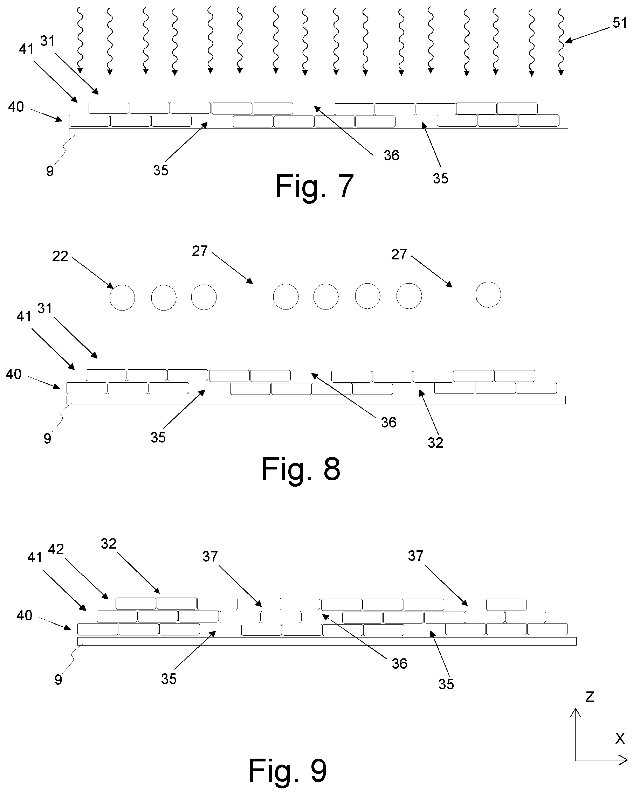

Fig. 6 illustrates the depositing of a second swath of droplets 21 on the first layer segment 40. Similar to Fig. 3, the jetted droplets 31 spread out increasing their radius parallel to the print medium 9. It will be appreciated that in practice the spread factor S may be different for droplets 31 landing on a layer segment of marking material as compared to droplets 30 landing directly on the print medium 9. The neighboring droplets 31 of the first category coalesce, while neighboring droplets 31 of the second category remain spaced apart by a void 26. Certain droplets 31 are deposited partially overlapping a void 35 in the first layer segment 40. The gelling agent provides sufficient viscosity to such overhanging droplets 31, so that these do not sag into the void 35 below them. Overhanging droplets 31 are preferably positioned with half or more of their area overlapping droplets 30 from the directly underlying layer segment 40. In Fig. 7, two adjacent droplets 31 in the higher layer segment 41 are deposited such that they overhang a void 25 in the lower layer segment 40 from opposite sides of said void 35, so that the adjacent droplets 31 come into direct contact with one another over said void 35, thereby forming a bridge over the void 35. Similar to Fig. 4, the deposited droplets 31 of second layer segment 41 are quickly cured by a predetermined dose of radiation 51, such that overhanging droplets 31 are prevented from sagging into respective voids 35 in the lower layer segment 40. Overhanging is herein preferably defined as a jetted droplet extending partially over an empty space, in this case a void 25, while also extending partially over a solid volume, in this case a jetted droplet 30 in the layer segment 40 below.

The second layer segment 41 preferably forms an integral or interconnected structure with the underlaying first layer segment 40. Every deposited droplet 31 in the second layer segment 41 is preferably connected to all other deposited droplets 30, 31 in the first and second layer segments 40, 41 via marking material. It will be appreciated that multiple, separate structures may be formed within a single print jobs.

Fig. 8 illustrates the repeating step of depositing a further layer segment 42 on the second, cured layer segment 41 by jetting another swath of droplets 32. Said swath of droplets 32 contains different spacings between droplets 32, similar to Fig. 2 and/or 5, but with a different geographical distribution of the voids 37. In consequence, as shown in Fig. 9 a matrix of voids 37 is created in the third layer segment 42, which positional matrix of voids 27 is different from the matrices applied to position the voids 35, 36 in the first and/or second layer segment 30, 31. The deposited droplets 32 in the third layer segment 42 are cured similar to Figs. 4 and 7 to preserve the overhanging positioning of droplets 32 over voids 36 in the second layer segment 41.

Fig. 9 illustrates the formation of an internal void 36, whose circumferential walls are entirely formed of droplets 31-32 of marking material. The void 36 itself is free of marking material. The circumference of the void 26 extends through at least three consecutive layer segments 40-42 and comprises a plurality of overhanging droplets 30-33. The relatively high viscosity of the marking material in combination of the rapid curing allows the voids 36 to be incorporated into the three dimensional in layer segment 40-42. This reduces the amount of marking material required for the structure as well the time required for jetting and/or curing. The steps in Fig. 8 and 9, including the curing, are repeated to complete the structure, so that an inner portion of the structure is filled with voids 35-37. The voids 35-37 are preferably distributed homogeneously throughout the inner portion, so that the density of material is substantially constant throughout the inner portion. The positions of the voids 35-37 are different in each layer segment 40-43. The variation in void position and/or size across the layer segments 40-43 may be randomized or in a predetermined variational order. If sufficient layer segments 40-43 are in between, the geographical distribution may even be repeated. It will be appreciated that the outer layer segments are generally printed without voids 35-38 to seal off the inner portion. It will further be appreciated that one or more buffer layers of marking material or primer may be applied to the print medium 9 before depositing the first layer segment 40 comprising voids 35.

Figs. 10 to 13 illustrates the geographical distribution of voids 35-38 across the different layer segments 40-43 in the in-plane direction X, Y of the print medium 9. Figs. 10 to 13 illustrate schematically a print mask, wherein each square represents a pixel. A colored square indicates a data with print instruction to jet a droplet of marking material at the respective position. A blank square represents a non-printing pixel, where no droplet is deposited in the respective swath. Each print mask is defined relative to a reference R, which corresponds to a fixed position on the print medium 9, for example a side edge. In this example, each pixel corresponds to a site for a single jetted droplet 30-33.

Fig. 10 illustrates a print mask for a portion of the first layer segment 40. The voids 35 in the first layer segment 40 in Fig. 10 have different sizes, i.e. are formed by different numbers of pixels, each pixel defining a landing site for a droplet. Multiple directly connected non-printing pixels are herein indicated as a single void 35. The first layer segment 40 comprises a plurality of voids 35, which are spaced apart one another in the in-plane directions X, Y.

Fig. 11 illustrates that the print mask for the second layer segment 41 is offset with respect to the reference by half the width of a pixel (i.e. the radius R2 of a single, flattened droplet), as compared to the first layer segment 40. In consequence, edges of the droplets 31 of the second layer segments 41 will substantially be positioned over the centers of droplets 30 in the first layer segment 40, as shown in Fig. 6. This allows droplets 31 to overhang at the edges of a void 35, thereby closing off or reducing the cross-section of the void. The print mask of Fig. 11 also comprises a plurality of spaced apart voids 36, but these voids 36 are different from the voids 35 in the first layer segment 40, either in their in-plane position and/or shape. While the single pixel voids 36 in the upper second segment 41 preferably do not overlap with other single pixel voids 35 from the first layer segment 40, the multi-pixel voids 36 each do overlap with a lower lying multi-pixel void 35, but have a different cross-sectional area.

Fig. 12 illustrates the print mask for the third layer segment 42, wherein the positions and/or dimensions of the voids 37 are again different from those in the previous layer segment 41. The print mask for the third layer segment 12 is offset with respect to the reference by half of a pixel width with respect to the print mask in Fig. 11. In this example the print mask of the third layer segment 42 is aligned with the reference R of the first layer segment 40, though these may in another example differ by an integer times the pixel width.

The fourth layer segment 43 is printed with aligned with the layer print mask in Fig. 11, so that it is shifted by half a pixel width with respect to the reference R. Again, the voids 38 are different from those in the previous layer segments 40-42. Multiple print mask may be printed stacked on top of these layer segments 40-43 to complete the structure. One more final full surface coverage layer segments may be applied as top layers to complete the structure and to apply color and/or varnish where required.

Fig. 14 illustrates examples of different types of void assemblies V1-V3. Each void assembly V1-V3 is fully enclosed, either entirely by marking material or in combination with the underlying print medium 9. A single pixel void assembly V1 is formed by droplets 32 overhanging droplets 31 in the layer segment 41 below them. The upper droplets 32 are in direct contact thereby forming a roof or bridge over the single pixel void 36. Larger voids may be formed by forming an adjoining row of the voids 36 in the Y-direction. Larger void assemblies V2, V3 may also be formed by stacking differently shaped voids 35-37 on top of one another in an overhanging manner. The left void assembly V2 has a pyramidal cross-section, which tapers in the vertical direction Z by consecutively stacked, overhanging droplets. Formation of such a pyramidal void assembly V2 is illustrated in the bottom left corner of Figs. 10 to 13. The void 35 of the pyramidal void structure V2 in the lower layer segment is formed of a greater number of empty pixel than the voids 36, 37 in the layer segments 41, 42 above it. The number of pixels per void 35-37 in the pyramidal void assembly V2 decreases with each additional layer segment 40-43 until the void assembly V2 is sealed by the top layer segment 42.

Void assembly V3 illustrates that by partially overlapping droplets in the different layer segments 40-43, the cross-section of a void structure V can both be increasing and decreasing in the vertical direction. In the second layer segment 41 the cross-section of a void 36 is larger than that of the void 35 is it formed on top of. In the following layer segment 42, the cross-section of the void 37 is decreased with respect to the void 36 in the second layer segment 41. The top layer segment closes the void assembly V1. The steps for forming said void structure V3 are illustrated in the bottom right corner of Figs. 10 to 13.

### Example

The three-dimensional structures shown here were obtained by using the commercially available Canon UVgel 460 ink. A hundred passes were applied to deposit droplets on top of each other, wherein the droplets were cured every pass by a UV light source trailing the printheads. Printing was conducted mono-directionally with the same carriage velocity every pass. The temperature of the print surface was controlled to be 24°C. The resolution of the printer is 600 dpi (in x-direction) x 1800 dpi (y-direction) and droplet size is 10 pL. Voids were created in the object by applying similar types of masks as shown in Fig. 10 to Fig.13 in each pass, by taking in account the average distance between droplets in x and y at this base resolution, and designing the masks as such that voids are formed via overhanging droplets on top of each other.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

## Claims

1. A method of inkjet printing a three-dimensional structure comprising the steps of:
- jetting a plurality of droplets (20-22) of marking material to form a first layer segment (40) formed of interconnected, jetted droplets (30-33), wherein the first layer segment (40) comprises a first matrix of voids (35-37), wherein the droplets (20-22) of marking material comprise a gelling agent for providing sufficient viscosity to allow a droplet to overhang with respect to a droplet it was deposited on;
- curing the first layer segment (40), such that the first matrix of voids (35-37) is maintained in the first layer segment (40);
- jetting a plurality of droplets (20-22) to form a second layer segment (41) formed of interconnected, jetted droplets (30-33), which second layer segment (41) is deposited overlapping the first layer segment (40), and wherein the second layer segment (41) comprises a second matrix of voids (35-37), wherein positions of voids (35-37) in the second matrix are different from voids (35-37) in the first matrix;
- curing the second layer segment (41), such that the second matrix of voids (35-37) is maintained in the second layer segment (41) and the second layer segment (41) forms an integral structure with the first layer segment (40),
wherein in the curing steps a time between jetting a droplet and curing said droplet is less than 1 s;
- repeating the previous steps to deposit further layer segments (40-43) to form the three-dimensional structure.

2. The method according to claim 1, wherein a cross-sectional width of the voids (35-37) is substantially equal to or greater than at least 70%, preferably 80%, or very preferably 90% of a diameter of the jetted droplets (30-33).

3. The method according to claim 2, wherein a distance D between centers of two droplets (30-33) forming opposite edges of a void (35-37) in a layer segment (40-43) follows the following equation: $D \geq 2 ⋅ S ⋅ \sqrt[3]{\frac{3 V}{4 π}}$ wherein V is a volume of a droplet and S is a droplet spread factor which is at least 1.5, preferably at least 1.6.

4. The method according to claim 2 or 3, wherein a distance D between centers of two droplets (30-33) forming opposite edges of a void (35-37) in a layer segment (40-43) follows the following equation: $D \geq 2 ⋅ n ⋅ S ⋅ \sqrt[3]{\frac{3 V}{4 π}}$ wherein V is a volume of a droplet, S is a droplet spread factor which is at least 1.5, preferably at least 1.6, and n is a non-zero integer.

5. The method according to any of the previous claims, wherein the second layer segment (41) is fully overlapping the first layer segment (40).

6. The method according to any of the previous claims, wherein each void (35-37) is comprised in one of a plurality of void assemblies (V1-V3), wherein each void assembly (V1-V3) is enclosed by marking material.

7. The method according to any of the previous claims, wherein voids (35-37) are delimited by jetted droplets (30-33) in the second layer segment (41) overhanging with respect to a respective jetted droplet (30-33) in the first layer segment (40) on which they were respectively jetted.

8. The method according to claim 7, wherein an overhanging droplet (30-33) in the second layer segment (41) is cured before its overhanging portion sags into the first layer segment (40).

9. The method according to claim 7 or 8, wherein the gelling agent provides sufficient viscosity to allow a jetted droplet (30-33) to overhang with respect to a droplet (30-33) it was deposited on by at least 10% of its diameter, preferably at least 20%, more preferably at least 30%, even more preferably at least 40%, and very preferably at least 50% of its diameter.

10. The method according to any of the claims 7 to 9, wherein the droplets (20-22; 30-33) further comprise a photo-initiating agent, preferably a UV light-initiating agent, for curing the droplets (20-22'; 30-33).

11. The method according to any of the previous claims, wherein jetted droplets (30-33) forming a wall section of each void (35-37) are positioned partially overlapping on top of one another, such that a portion of the jetted droplets (30-33) inside the void (25-37) remains uncovered.

12. An inkjet printer comprising:
- a printhead assembly (2) mounted over a medium support surface (10) and comprising at least one printhead (11) comprising nozzles (12, 12A-12E) for jetting droplets of UV curable marking material onto a print medium (9) on the medium support surface (10);
- a curing station (14) configured for emitting UV radiation for curing marking material on the print medium (9) on the medium support surface (10);
- a controller configured for performing the method according to any of the previous claims on the printer.

13. A computer program comprising instructions which, when the program is executed by a printer according to claim 12, causes the printer to carry out the steps of the method of any of the claims 1 to 11.

## Patentansprüche

1. Verfahren zum Tintenstrahldrucken einer dreidimensionalen Struktur, das die folgenden Schritte umfasst:
- Ausstoßen einer Vielzahl von Tröpfchen (20-22) aus Markierungsmaterial, um ein erstes Schichtsegment (40) zu bilden, das aus miteinander verbundenen, ausgestoßenen Tröpfchen (30-33) besteht, wobei das erste Schichtsegment (40) eine erste Matrix aus Hohlräumen (35-37) umfasst, wobei die Tröpfchen (20-22) des Markierungsmaterials ein Geliermittel enthalten, um eine ausreichende Viskosität bereitzustellen, damit ein Tröpfchen gegenüber einem Tröpfchen, auf dem es abgeschieden wurde, überhängen kann;
- Aushärten des ersten Schichtsegments (40), so dass die erste Matrix aus Hohlräumen (35-37) im ersten Schichtsegment (40) erhalten bleibt;
- Ausstoßen einer Vielzahl von Tröpfchen (20-22) zur Bildung eines zweiten Schichtsegments (41), das aus miteinander verbundenen, ausgestoßenen Tröpfchen (30-33) gebildet ist, wobei das zweite Schichtsegment (41) überlappend auf das erste Schichtsegment (40) aufgebracht wird, wobei das zweite Schichtsegment (41) eine zweite Matrix aus Hohlräumen (35-37) umfasst, wobei sich die Positionen der Hohlräume (35-37) in der zweiten Matrix von denen der Hohlräume (35-37) in der ersten Matrix unterscheiden;
- Aushärten des zweiten Schichtsegments (41), so dass die zweite Matrix aus Hohlräumen (35-37) im zweiten Schichtsegment (41) erhalten bleibt und das zweite Schichtsegment (41) eine integrale Struktur mit dem ersten Schichtsegment (40) bildet, wobei in den Aushärtungsschritten die Zeit zwischen dem Ausstoßen eines Tropfens und dem Aushärten dieses Tropfens weniger als 1 s beträgt;
- Wiederholen der vorangegangenen Schritte, um weitere Schichtsegmente (40-43) aufzubringen und die dreidimensionale Struktur zu bilden.

2. Verfahren nach Patentanspruch 1, wobei eine Querschnittsbreite der Hohlräume (35-37) im Wesentlichen gleich oder größer als mindestens 70 %, vorzugsweise 80 % oder am bevorzugtesten 90 % eines Durchmessers der aufgesprühten Tröpfchen (30-33) ist.

3. Verfahren nach Anspruch 2, wobei ein Abstand D zwischen den Mittelpunkten zweier Tröpfchen (30-33), die gegenüberliegende Ränder eines Hohlraums (35-37) in einem Schichtsegment (40-43) bilden, der folgenden Gleichung folgt: $D \geq 2 ⋅ S ⋅ \sqrt[3]{\frac{3 V}{4 π}}$ wobei V das Volumen eines Tröpfchens und S ein Tröpfchenausbreitungsfaktor ist, der mindestens 1,5, vorzugsweise mindestens 1,6 beträgt.

4. Verfahren nach Patentanspruch 2 oder 3, wobei ein Abstand D zwischen den Mittelpunkten zweier Tröpfchen (30-33), die gegenüberliegende Ränder eines Hohlraums (35-37) in einem Schichtsegment (40-43) bilden, der folgenden Gleichung folgt: $D \geq 2 ⋅ n ⋅ S ⋅ \sqrt[3]{\frac{3 V}{4 π}}$ wobei V das Volumen eines Tropfens ist, S ein Tropfenspreizungsfaktor ist, der mindestens 1,5, vorzugsweise mindestens 1,6 beträgt, und n eine von Null verschiedene ganze Zahl ist.

5. Verfahren nach einem der vorstehenden Patentansprüche, wobei das zweite Schichtsegment (41) das erste Schichtsegment (40) vollständig überlappt.

6. Verfahren nach einem der vorstehenden Patentansprüche, wobei jeder Hohlraum (35-37) in einer von mehreren Hohlraumgruppen (V1-V3) enthalten ist, wobei jede Hohlraumgruppe (V1-V3) von Markierungsmaterial umschlossen ist.

7. Verfahren nach einem der vorstehenden Patentansprüche, wobei Hohlräume (35-37) durch aufgesprühte Tröpfchen (30-33) in dem zweiten Schichtsegment (41) begrenzt sind, die in Bezug auf ein jeweiliges aufgesprühtes Tröpfchen (30-33) in dem ersten Schichtsegment (40), auf das sie jeweils aufgesprüht wurden, überhängen.

8. Verfahren nach Patentanspruch 7, wobei ein überstehender Tropfen (30-33) im zweiten Schichtsegment (41) ausgehärtet wird, bevor sein überstehender Abschnitt in das erste Schichtsegment (40) absinkt.

9. Verfahren nach Patentanspruch 7 oder 8, wobei das Geliermittel eine ausreichende Viskosität bereitstellt, damit ein aufgespritztes Tröpfchen (30-33) gegenüber einem Tröpfchen (30-33) , auf das es aufgebracht wurde, um mindestens 10 % seines Durchmessers, vorzugsweise um mindestens 20 %, noch bevorzugter um mindestens 30 %, am meisten bevorzugt um mindestens 40 % und am allermeisten bevorzugt um mindestens 50 % seines Durchmessers überzuhängen.

10. Verfahren nach einem der Patentansprüche 7 bis 9, wobei die Tröpfchen (20-22; 30-33) ferner ein Photoinitiatormittel, vorzugsweise ein UV-Licht-Initiatormittel, zum Aushärten der Tröpfchen (20-22'; 30-33) umfassen.

11. Verfahren nach einem der vorstehenden Patentansprüche, wobei die ausgestoßenen Tröpfchen (30-33), die einen Wandabschnitt jedes Hohlraums (35-37) bilden, teilweise überlappend übereinander angeordnet sind, so dass ein Teil der ausgestoßenen Tröpfchen (30-33) innerhalb des Hohlraums (25-37) unbedeckt bleibt.

12. Ein Tintenstrahldrucker, umfassend:
- eine Druckkopfbaugruppe (2), die über einer Medienauflagefläche (10) angebracht ist und mindestens einen Druckkopf (11) umfasst, der Düsen (12, 12A-12E) zum Ausstoßen von Tröpfchen aus UV-härtbarem Markierungsmaterial auf ein Druckmedium (9) auf der Medienauflagefläche (10) umfasst;
- eine Härtungsstation (14), die so konfiguriert ist, dass sie UV-Strahlung zum Aushärten des Markierungsmaterials auf dem Druckmedium (9) auf der Medienauflagefläche (10) aussendet;
- eine Steuerung, die so konfiguriert ist, dass sie das Verfahren gemäß einem der vorstehenden Patentansprüche auf dem Drucker ausführt.

13. Ein Computerprogramm, das Anweisungen umfasst, die, wenn das Programm von einem Drucker gemäß Patentanspruch 12 ausgeführt wird, den Drucker veranlassen, die Schritte des Verfahrens gemäß einem der Patentansprüche 1 bis 11 auszuführen.

## Revendications

1. Procédé d'impression par jet d'encre d'une structure tridimensionnelle, comprenant les étapes suivantes :
- la projection d'une pluralité de gouttelettes (20-22) de matériau de marquage pour former un premier segment de couche (40) constitué de gouttelettes interconnectées, giclées (30-33), dans lequel le premier segment de couche (40) comprend une première matrice de vides (35-37), dans lequel les gouttelettes (20-22) de matériau de marquage comprennent un agent gélifiant destiné à fournir une viscosité suffisante pour permettre à une gouttelette de surplomber une gouttelette sur laquelle elle a été déposée ;
- durcir le premier segment de couche (40), de telle sorte que la première matrice de vides (35-37) soit conservée dans le premier segment de couche (40) ;
- projeter une pluralité de gouttelettes (20-22) pour former un deuxième segment de couche (41) constitué de gouttelettes projetées (30-33) interconnectées, lequel deuxième segment de couche (41) est déposé en chevauchant le premier segment de couche (40), et dans lequel le deuxième segment de couche (41) comprend une deuxième matrice de vides (35-37), les positions des vides (35-37) dans la deuxième matrice étant différentes de celles des vides (35-37) dans la première matrice ;
- durcir le segment de couche (41), de telle sorte que la deuxième matrice de vides (35-37) soit conservée dans le segment de couche (41) et que le segment de couche (41) forme une structure monolithique avec le segment de couche (40),
dans lequel, lors des étapes de durcissement, le temps écoulé entre la projection d'une gouttelette et le durcissement de ladite gouttelette est inférieur à 1 s ;
- répéter les étapes précédentes pour déposer d'autres segments de couche (40-43) afin de former la structure tridimensionnelle.

2. Procédé selon la revendication 1, dans lequel la largeur en section transversale des vides (35-37) est sensiblement égale ou supérieure à au moins 70 %, de préférence 80 %, ou de manière très préférée 90 % du diamètre des gouttelettes projetées (30-33).

3. Procédé selon la revendication 2, dans lequel une distance D entre les centres de deux gouttelettes (30-33) formant les bords opposés d'un vide (35-37) dans un segment de couche (40-43) obéit à l'équation suivante : $D \geq 2 ⋅ S ⋅ \sqrt[3]{\frac{3 V}{4 π}}$ où V est le volume d'une gouttelette et S est un facteur d'étalement des gouttelettes qui est d'au moins 1,5, de préférence d'au moins 1,6.

4. Procédé selon la revendication 2 ou 3, dans lequel la distance D entre les centres de deux gouttelettes (30-33) formant les bords opposés d'un vide (35-37) dans un segment de couche (40-43) obéit à l'équation suivante : $D \geq 2 ⋅ n ⋅ S ⋅ \sqrt[3]{\frac{3 V}{4 π}}$ où V représente le volume d'une gouttelette, S est un facteur d'étalement de la gouttelette qui est d'au moins 1,5, de préférence d'au moins 1,6, et n est un nombre entier non nul.

5. Procédé selon l'une quelconque des revendications précédentes, dans lequel le segment de couche secondaire (41) recouvre entièrement le segment de couche primaire (40).

6. Procédé selon l'une quelconque des revendications précédentes, dans lequel chaque vide (35-37) est compris dans l'un d'une pluralité d'ensembles de vides (V1-V3), chaque ensemble de vides (V1-V3) étant entouré par un matériau de marquage.

7. Procédé selon l'une quelconque des revendications précédentes, dans lequel les vides (35-37) sont délimités par des gouttelettes projetées (30-33) dans le segment de couche (41) en surplomb par rapport à une gouttelette projetée respective (30-33) dans le segment de couche (40) sur lequel elles ont été respectivement projetées.

8. Procédé selon la revendication 7, dans lequel une gouttelette en surplomb (30-33) dans le segment de couche secondaire (41) est durcie avant que sa partie en surplomb ne s'affaisse dans le segment de couche primaire (40).

9. Procédé selon la revendication 7 ou 8, dans lequel l'agent gélifiant confère une viscosité suffisante pour permettre à une gouttelette projetée (30-33) de dépasser par rapport à une gouttelette (30-33) sur laquelle elle a été déposée d'au moins 10 % de son diamètre, de préférence d'au moins 20 %, plus préférablement d'au moins 30 %, encore plus préférablement d'au moins 40 %, et très préférablement d'au moins 50 % de son diamètre.

10. Procédé selon l'une quelconque des revendications 7 à 9, dans lequel les gouttelettes (20-22 ; 30-33) comprennent en outre un agent photo-initiateur, de préférence un agent initiateur à la lumière UV, pour le durcissement des gouttelettes (20-22 ; 30-33).

11. Procédé selon l'une quelconque des revendications précédentes, dans lequel les gouttelettes projetées (30-33) formant une partie de paroi de chaque vide (35-37) sont positionnées de manière à se chevaucher partiellement les unes sur les autres, de telle sorte qu'une partie des gouttelettes projetées (30-33) à l'intérieur du vide (25-37) reste découverte.

12. Imprimante à jet d'encre comprenant :
- un ensemble de tête d'impression (2) monté au-dessus d'une surface de support de support (10) et comprenant au moins une tête d'impression (11) comportant des buses (12, 12A-12E) destinées à projeter des gouttelettes de matériau de marquage durcissable aux UV sur un support d'impression (9) placé sur la surface de support de support (10) ;
- une station de durcissement (14) configurée pour émettre un rayonnement UV afin de durcir le matériau de marquage sur le support d'impression (9) situé sur la surface de support de support (10) ;
- un contrôleur configuré pour mettre en œuvre le procédé selon l'une quelconque des revendications précédentes sur l'imprimante.

13. Programme informatique comprenant des instructions qui, lorsque le programme est exécuté par une imprimante selon la revendication 12, amènent l'imprimante à exécuter les étapes du procédé de l'une quelconque des revendications 1 à 11.
